# EUROPÄISCHE PATENTANMELDUNG

(11) **EP 4 600 132 A1**
(43) Veröffentlichungstag der Anmeldung: **13.08.2025**
(21) Anmeldenummer: 25156169.2
(22) Anmeldetag: 06.02.2025
(51) Int. Cl.: B62J 50/22, B62J 50/21

(54) **ANZEIGEVORRICHTUNG ZUM ANZEIGEN VERSCHIEDENER ZUSTÄNDE EINES FAHRRADS**

(30) Priorität: 08.02.2024 DE 102024103614
(71) Anmelder: TQ-Systems GmbH, 82229 Seefeld (DE)
(72) Erfinder: Theil, Daniel, 82229 Seefeld (DE); Schaub, Jan, 82386 Oberhausen (DE)
(74) Vertreter: WBH Wachenhausen Patentanwälte PartG mbB

(57) **Zusammenfassung**

Die vorliegende Erfindung bezieht sich auf eine Anzeigevorrichtung (1) zum Anzeigen verschiedener Zustände, insbesondere verschiedener Betriebsmodi, eines Fahrrads, wobei die Anzeigevorrichtung (1) einen Befestigungsabschnitt (10), einen Anzeigeabschnitt (14) und eine Kommunikationsschnittstelle (15) aufweist, wobei der Befestigungsabschnitt (10) dazu ausgebildet ist, die Anzeigevorrichtung (1) an einem distalen Abschnitt (22) eines Lenkers (20) zu befestigen, wobei die Kommunikationsschnittstelle (15) dazu ausgebildet ist, die verschiedenen Zustände des Fahrrads zu empfangen, wobei der Anzeigeabschnitt (14) eine Leuchtvorrichtung (2) aufweist, welche dazu ausgebildet ist, die verschiedenen empfangenen Zustände anzuzeigen, und wobei die Anzeigevorrichtung (1) an dem Lenker (20) durch ein relatives Ineinanderschieben von dem Befestigungsabschnitt (10) und dem distalen Abschnitt (22) des Lenkers (20) montierbar ist. Zudem bezieht sich die vorliegende Erfindung auf einen Lenker (20) mit einer solchen Anzeigevorrichtung (1), auf ein Anzeigesystem mit einer solchen Anzeigevorrichtung (1), auf ein Fahrrad mit solch einem Lenker (20) und/oder einer solchen Anzeigevorrichtung (1), und auf ein Verfahren zum Anzeigen verschiedener Zustände eines Fahrrads durch solch eine Anzeigevorrichtung (1).

## Beschreibung

### Technisches Gebiet

Die vorliegende Erfindung bezieht sich auf eine Anzeigevorrichtung zum Anzeigen verschiedener Zustände eines Fahrrads. Ferner bezieht sich die vorliegende Erfindung auf einen Fahrradlenker, ein Anzeigesystem und ein Fahrrad sowie auf ein Verfahren zum Anzeigen verschiedener Zustände eines Fahrrads.

### Stand der Technik

Aus dem Stand der Technik sind Fahrradcomputer bekannt, welche einen Zustand eines Fahrrads, beispielsweise einer Geschwindigkeit, anzeigen können. Ferner sind Fahrradcomputer bekannt, welche einen Betriebsmodus eines Elektromotors eines Fahrrads anzeigen können. Dafür ist beispielsweise außenseitig an einem Lenker eines Fahrrads, welcher auch als Fahrradlenker bezeichnet wird, oder einem Rahmen des Fahrrads ein Bildschirm angeordnet. Der Bildschirm wird beispielsweise mit einer Klemme an dem Fahrradlenker befestigt.

### Darstellung der Erfindung

Ein erster Aspekt betrifft eine Anzeigevorrichtung zum Anzeigen verschiedener Zustände, insbesondere verschiedener Betriebsmodi, eines Fahrrads. Das Fahrrad kann beispielsweise als Mountainbike, Tourenrad oder Rennrad ausgebildet sein. Das Fahrrad kann einen Elektromotor aufweisen, insbesondere zur Unterstützung einer Muskelkraft eines Fahrers. Das Fahrrad kann beispielsweise als Pedelec ausgebildet sein. Das Fahrrad kann eine Gangschaltung, eine Bremsvorrichtung und/oder eine Federungsvorrichtung aufweisen. Die Anzeigevorrichtung kann eine Vorrichtung sein, welche dazu ausgebildet ist, die verschiedenen Zustände anzuzeigen. Ein Zustand kann ein Betriebsmodus des Fahrrads sein, beispielsweise ein Betriebszustand des Elektromotors. Beispielsweise kann das Fahrrad und/oder der Elektromotor einen Sport-Modus, einen Eco-Modus, einen Tour-Modus, einen Turbo-Modus und/oder einen weiteren Modus aufweisen. Zusätzlich oder alternativ kann das Fahrrad und/oder der Elektromotor einen Eco-Modus, einen Mid-Modus, einen High-Modus und/oder einen weiteren Modus aufweisen. Ein Betriebsmodus kann sich beispielsweise durch eine Unterstützungsleistung, Drehzahl, Beschleunigung und/oder weiteren Merkmalen von einem weiteren Betriebsmodus unterscheiden. Zusätzlich oder alternativ kann der Zustand auch einen Zustand der Gangschaltung, der Bremsvorrichtung und/oder der Federungsvorrichtung aufweisen. Beispielsweise kann der Zustand einen eingestellten Gang, einen Schaltungsmodus, eine Bremsstärke, einen Fahrwerksmodus, eine Federungslänge und/oder eine Federkraft aufweisen. Ein Zustand kann mehrere Subzustände, beispielsweise von unterschiedlichen Systemen, aufweisen. Die Subzustände können gemeinsam angezeigt werden. Beispielsweise kann der Zustand einen Betriebsmodus des Elektromotors und einen Ladezustand einer Batterie zur Stromversorgung des Elektromotors aufweisen.

Die Anzeigevorrichtung weist einen Befestigungsabschnitt, einen Anzeigeabschnitt und eine Kommunikationsschnittstelle auf. Die Anzeigevorrichtung kann eine im Wesentlichen zylindrischer Grundform aufweisen. Die Anzeigevorrichtung kann auch eine im Wesentlichen quaderförmige, pyramidale, kugelförmige oder andere Grundform, wie einen runden Querschnitt und eine gekrümmte Längserstreckung, aufweisen. Die Anzeigevorrichtung kann eine Längsachse aufweisen, welche sich beispielsweise durch den Befestigungsabschnitt und den Anzeigeabschnitt erstreckt.

Der Befestigungsabschnitt ist dazu ausgebildet, die Anzeigevorrichtung an einem distalen Abschnitt eines Lenkers zu befestigen. Der Lenker kann beispielsweise als im Wesentlichen gerades Rohr ausgebildet sein. Aus ergonomischen Gründen können die beiden Lenkerseiten auch zueinander gekrümmt sein. Der Befestigungsabschnitt kann eine Längsachse aufweisen, die im befestigten Zustand koaxial zu einer Achse des distalen Abschnitts des Lenkers sein kann. Die Längsachse des Befestigungsabschnitts kann mit der Längsachse der Anzeigevorrichtung zusammenfallen. Der distale Abschnitt des Lenkers kann ein Ende des Lenkers umfassen, beispielsweise ein Ende, das einen Griff aufweist. Der distale Abschnitt kann ein im Wesentlichen kreisförmiges Ende des Lenkers aufweisen. Der distale Abschnitt kann eine Stirnfläche eines im Wesentlichen zylindrischen Elements und/oder Abschnitts des Lenkers aufweisen. Der distale Abschnitt kann eine Ausnehmung für ein Aufnehmen wenigstens eines Teilbereichs des Befestigungsabschnitts aufweisen. Beispielsweise kann der distale Abschnitt durch ein offenes Ende einer Lenkerstange gebildet sein. Das distale Ende des Lenkers kann beispielsweise ein linkes oder rechtes Ende eines Lenkers des Fahrrads sein. Der Befestigungsabschnitt kann an einem proximalen Abschnitt der Anzeigevorrichtung angeordnet sein. Proximal kann hier näher an einer Befestigung des Lenkers an dem übrigen Fahrrad sein, also beispielsweise in einer Richtung hin zu einem Vorbau. Distal kann dagegen entfernt zu dem übrigen Fahrrad sein, also beispielsweise in einer Richtung weg von einem Vorbau. So kann proximaler Abschnitt näher am Zentrum des Fahrrads als ein distaler Abschnitt angeordnet sein. Der Befestigungsabschnitt kann eine im Wesentlichen zylindrische Grundform aufweisen. Der Befestigungsabschnitt kann auch eine im Wesentlichen quaderförmige, pyramidale, kugelförmige oder andere Grundform aufweisen. Der Befestigungsabschnitt kann eine Grundform aufweisen, die zu einer Form des distalen Abschnitts des Lenkers korrespondiert, beispielsweise zu einer Ausnehmung für die Aufnahme des Befestigungsabschnitts. Beispielsweise kann der distale Abschnitt die Grundform eines hohlen Zylinders aufweisen und der Befestigungsabschnitt die Grundform eines entsprechenden Zylinders. Der Befestigungsabschnitt kann ein Metall, einen Kunststoff, einen keramischen Werkstoff und/oder eine Kombination dieser aufweisen. Der Befestigungsabschnitt kann beispielsweise an dem distalen Abschnitt des Lenkers geklemmt sein.

Die Kommunikationsschnittstelle ist dazu ausgebildet, die verschiedenen Zustände des Fahrrads zu empfangen. Die Kommunikationsschnittstelle kann die Zustände kabelbasiert und/oder kabellos empfangen. Beispielsweise kann die Kommunikationsschnittstelle wenigstens einen Stecker aufweisen, durch welche die Kommunikationsschnittstelle Daten, Signale, und/oder Strom empfangen kann. Die Daten bzw. die Signale können Informationen über eine Geschwindigkeit, ein Drehmoment, eine Leistung, einen Betriebsmodus, einen Ladezustand, eine Position und/oder weitere Informationen aufweisen. Die Kommunikationsschnittstelle kann auch dazu ausgebildet sein, über Bluetooth und/oder ANT+ Daten zu empfangen. Die Anzeigevorrichtung kann beispielsweise über die Kommunikationsschnittstelle mit einem Smartphone eines Benutzers kommunizieren und/oder gekoppelt werden. Die Anzeigevorrichtung kann beispielsweise über die Kommunikationsschnittstelle mit einer Steuervorrichtung und/oder einem Sensor des Fahrrads kommunizieren und/oder gekoppelt werden, beispielsweise mit einer Motorsteuerung und/oder einem Batteriemanagementsystem. Die Kommunikationsschnittstelle kann dazu ausgebildet sein, kabellos Strom zu empfangen, beispielsweise induktiv. Die Kommunikationsschnittstelle kann standardisierte Stecker aufweisen. Beispielsweise kann die Kommunikationsschnittstelle USB-, RJ45- oder andere Stecker aufweisen. Die Kommunikationsschnittstelle kann auch nichtstandardisierte Stecker aufweisen. Die Kommunikationsschnittstelle kann männliche, weibliche oder sowohl männliche als auch weibliche Stecker aufweisen. Die Stecker können für eine zusätzliche Fixierung der Anzeigevorrichtung ausgebildet sein, beispielsweise durch eine Klemmung und/oder durch eine bajonettartige Verbindung der Stecker. Die Kommunikationsschnittstelle kann an einem Endabschnitt der Anzeigevorrichtung angeordnet sein. Beispielsweise kann die Kommunikationsschnittstelle an einer Hinterseite der Anzeigevorrichtung angeordnet sein. Die Kommunikationsschnittstelle kann am oder in dem Anzeigeabschnitt angeordnet sein. Beispielsweise können jeweilige Stecker distal von dem Anzeigeabschnitt vorstehen und jeweilige weitere Elektronikbauteile der Kommunikationsschnittstelle in dem Anzeigeabschnitt angeordnet sein. Die Kommunikationsschnittstelle kann auch zwischen dem Befestigungsabschnitt angeordnet sein, beispielsweise radial zwischen Anlageelementen des Befestigungsabschnitts. Die Kommunikationsschnittstelle kann am Befestigungsabschnitt angeordnet sein.

Der Anzeigeabschnitt weise eine Leuchtvorrichtung auf, welche dazu ausgebildet ist, die verschiedenen empfangenen Zustände anzuzeigen. Der Anzeigeabschnitt kann an einem dem Befestigungsabschnitt entgegengesetzten Abschnitt angeordnet sein. Der Anzeigeabschnitt kann eine zylindrische Grundform aufweisen. Der Anzeigeabschnitt kann auch eine im Wesentlichen quaderförmige, pyramidale, kugelförmige oder andere Grundform aufweisen. Der Anzeigeabschnitt kann an einem distalen Abschnitt der Anzeigevorrichtung angeordnet sein, wobei ein distaler Abschnitt entgegengesetzt zu einem proximalen Abschnitt liegt. Der Anzeigeabschnitt kann wenigstens teilweise von dem distalen Abschnitt des Lenkers vorstehen, insbesondere von einer Ausnehmung in dem Lenker zur Aufnahme des Befestigungsabschnitts. Die Leuchtvorrichtung kann eine oder auch mehrere Leuchten aufweisen, beispielsweise mehrere gleichmäßig voneinander beabstandete Leuchten. Die Anzeigevorrichtung kann beispielsweise fünf Leuchten aufweisen. Alternativ kann die Anzeigevorrichtung auch weniger oder mehr Leuchten aufweisen. Die Leuchtvorrichtung kann Spiegel, optische Fasern, Linsen und/oder weitere Mittel aufweisen, um Licht zu brechen, reflektieren, beugen und/oder auf weitere Art weiterzuleiten und/oder zu verändern. Die Leuchten können als LEDs ausgebildet sein. Die Leuchtvorrichtung kann beispielsweise mehrere LEDs aufweisen, welche unterschiedliche oder auch die gleiche Farbe aufweisen können. Mehrere LEDs mit unterschiedlichen Farben können zusammen verwendet werden, um unterschiedliche Farben und/oder Zustände anzuzeigen. Einige oder alle Leuchten bzw. LEDs können dazu ausgebildet sein, mit unterschiedlichen Farben zu leuchten. Beispielsweise kann eine grüne Farbe den Eco-Modus, eine blaue Farbe den Mid-Modus, und/oder eine rote Farbe den High-Modus anzeigen. Beispielsweise kann ein An- bzw. ein Aus-Zustand durch das An- bzw. Ausschalten der Anzeigeleuchten angezeigt werden. Der Anzeigeabschnitt kann mehrere Zustände gleichzeitig anzeigen. Beispielsweise kann der Anzeigeabschnitt einen Ladezustand und einen Betriebsmodus gleichzeitig anzeigen. Beispielsweise können alle Leuchten in einer bestimmten Farbe leuchten, um den Betriebsmodus anzuzeigen. Die Anzahl der angeschalteten Leuchten kann dann einen Ladezustand anzeigen. Der Anzeigeabschnitt kann auch weitere Zustände gleichzeitig anzeigen. Der Anzeigeabschnitt kann auch mehr als zwei Zustände gleichzeitig anzeigen. Die Leuchtvorrichtung kann durch einen Dynamo des Fahrrads mit Elektrizität versorgt werden. Zusätzlich oder alternativ kann die Leuchtvorrichtung auch über eine Batterie oder einen Akkumulator, beispielsweise eine Lithium-Ionen-Batterie, mit Elektrizität versorgt werden. Beispielsweise kann die Stromversorgung für den Elektromotor des Fahrrads auch die Anzeigevorrichtung mit Strom versorgen.

Die Anzeigevorrichtung ist durch ein relatives Ineinanderschieben von dem Befestigungsabschnitt und dem distalen Abschnitt des Lenkers an dem Lenker montierbar. Beispielsweise kann die Anzeigevorrichtung entlang dessen Längserstreckung in und/oder auf den distalen Abschnitt des Lenkers entlang einer Längserstreckung des distalen Abschnitts eingeschoben bzw. aufgeschoben werden. Durch das Ineinanderschieben kann die Anzeigevorrichtung an dem distalen Abschnitt des Lenkers gehalten werden. Es kann eine zusätzliche Fixierung, beispielsweise durch eine Schraube, eine Verklebung, eine Schnappverbindung und/oder die Stecker der Kommunikationsschnittstelle erfolgen. Im montierten Zustand kann die Leuchtvorrichtung für einen Benutzer, z.B. den Fahrer, sichtbar sein, insbesondere wenn der Benutzer bzw. Fahrer auf dem Fahrrad sitzt. Beispielsweise können wenigstens jeweilige Leuchten im montierten Zustand von dem Lenker vorstehen oder zumindest unverdeckt sein. Der Anzeigeabschnitt kann von dem distalen Abschnitt des Lenkers hervorstehen. Der Anzeigeabschnitt kann auch im distalen Abschnitt des Lenkers angeordnet sein. Der Anzeigeabschnitt kann mit einer äußeren Mantelfläche des distalen Abschnitts des Lenkers im montierten Zustand im Wesentlichen bündig anschließen. Das relative Ineinanderschieben kann ein relatives Verschieben aufweisen, bei welchem ein Teil in das andere eingreift bzw. in das andere hineingeschoben wird. Insbesondere kann ein relatives Ineinanderschieben ein koaxiales Verschieben entlang einer Längsachse bzw. einer Einschubachse aufweisen. Eine Einschubachse kann einer Längsachse der Anzeigevorrichtung oder des Befestigungsabschnitts entsprechen. Beispielsweise kann der Befestigungsabschnitt koaxial zum distalen Abschnitt des Lenkers angeordnet sein und entlang einer gemeinsamen Längsachse oder einer Einschubachse verschoben werden, um montiert zu werden. Ein Ineinanderschieben kann auch ein nicht koaxiales Verschieben aufweisen.

Bei einem Ineinanderschieben kann der Befestigungsabschnitt mit einer innere Mantelfläche des distalen Abschnitts des Lenkers kontaktiert werden und beispielsweise eingreifen oder eine Presspassung eingehen. Beispielsweise kann der Befestigungsabschnitt eine zylindrische Grundform aufweisen, die in das im Wesentlichen als Hohlzylinder ausgeführte distale Ende des Lenkers geklemmt wird. Bei einem Ineinanderschieben kann der Befestigungsabschnitt auch mit einer äußeren Mantelfläche des distalen Abschnitts des Lenkers kontaktiert werden und beispielsweise eingreifen oder eine Presspassung eingehen. Beispielsweise kann der Befestigungsabschnitt im Wesentlichen einen Hohlzylinder als Grundform aufweisen, und an einer äußeren Mantelfläche des distalen Abschnitts des Lenkers eingreifen. Bei einem Ineinanderschieben kann der Befestigungsabschnitt sowohl mit einer inneren als auch mit einer äußeren Mantelfläche des distalen Abschnitts des Lenkers kontaktiert werden und beispielsweise eingreifen oder eine Presspassung eingehen. Beispielsweise kann der Befestigungsabschnitt eine bogenförmige, insbesondere kreisförmige, Nut ausbilden, in welche ein Rohrstück des Lenkers eingeführt wird. Bei einem relativen Ineinanderschieben kann der Befestigungsabschnitt auch anders in Kontakt mit dem distalen Abschnitt des Lenkers treten. Ein relatives Ineinanderschieben kann auch eine Drehung um eine Achse oder weitere Bewegungen aufweisen.

Die Anzeigevorrichtung ist kompakt und einfach zu befestigen. Durch das Ineinanderschieben ist eine starke Integration in das Fahrrad möglich. Dem Benutzer können so mit geringem Aufwand verschiedene Zustände des Fahrrads angezeigt werden. Zudem kann die Anzeigevorrichtung in dem distalen Abschnitt des Lenkers gut geschützt aufgenommen werden. Auch eine geschützte kabelgebundene Verbindung mit anderen Systemen des Fahrrads ist so einfach möglich. Das Cockpit des Fahrrads kann so frei von außen sichtbaren Verkabelungen für die Anzeigevorrichtung sein und so sehr aufgeräumt sein.

Die Anzeigevorrichtung kann einen Helligkeitssensor aufweisen. Der Helligkeitssensor kann dazu eingerichtet sein, eine Umgebungshelligkeit zu erfassen. Der Helligkeitssensor kann ferner dazu eingerichtet sein, eine erfasste Umgebungshelligkeit an die Leuchtvorrichtung oder an eine Steuervorrichtung weiterzuleiten. Beispielsweise kann dies über die Kommunikationsschnittstelle weitergeleitet werden. Die Anzeigevorrichtung kann dazu eingerichtet sein, eine Helligkeit der Leuchtvorrichtung in Abhängigkeit der gemessenen Umgebungshelligkeit einzustellen. Ein Einstellen einer Helligkeit der Leuchtvorrichtung kann ein Einstellen eine Leuchtkraft der Leuchtvorrichtung aufweisen. Beispielsweise kann die Leuchtvorrichtung eine hohe Helligkeit einstellen, wenn eine hohe Umgebungshelligkeit gemessen wird. Die Leuchtvorrichtung kann auch dazu eingerichtet sein, eine niedrige Helligkeit einzustellen, wenn eine niedrige Umgebungshelligkeit gemessen wird. Dadurch kann der angezeigte Zustand auch bei unterschiedlichen Lichtverhältnissen durch den Fahrer gut erkannt werden.

Durch das Bereitstellen einer Anzeigevorrichtung am distalen Abschnitt des Lenkers wird ein besonders leichtes Erfassen eines Zustands des Fahrrads für einen Fahrer ermöglicht. Durch eine solche Anordnung kann eine besonders kompakte, aerodynamische und/oder optisch ansprechende Bauweise der Anzeigevorrichtung erzielt werden. Beispielsweise kann somit die Anzeigevorrichtung besonders wenig bis zu gar nicht vom Lenker abstehen und somit einen Luftstrom besonders wenig beeinflussen. Auch kann eine solche Anordnung optisch für einen Benutzer besonders ansprechend sein, da diese die geometrische Gestaltung des Fahrradlenkers nicht bzw. nur minimal beeinflusst. Durch das Bereitstellen einer Leuchtvorrichtung kann ein Erfassen des Zustands seitens des Fahrers sehr einfach sein, da diese besonders einfach und/oder deutlich von einem Fahrer gesehen werden kann. Die Leuchtvorrichtung kann ein Erfassen des Zustands auch bei Nacht, Nebel, und/oder weiteren Situationen mit beeinträchtigter Sichtbarkeit ermöglichen und eine optisch besonders ansprechende Anzeige bereitstellen.

In einer Ausführungsform bildet der der Befestigungsabschnitt einen ersten Endabschnitt der Anzeigevorrichtung aus und der Anzeigeabschnitt bildet einen dazu entgegengesetzten Endabschnitt der Anzeigevorrichtung aus. Beispielsweise kann der Anzeigeabschnitt und der Befestigungsabschnitt gegenüberliegende Enden der zylindrischen Grundform der Anzeigevorrichtung ausbilden. Ein Endabschnitt kann dabei ein Abschnitt sein, der sich an einem Ende der Anzeigevorrichtung befindet. Beispielsweise kann die Anzeigevorrichtung einen zylindrischen Grundkörper aufweisen, und ein Endabschnitt eine Vorder- bzw. Hinterseite des zylindrischen Grundkörpers aufweisen. Ein Endabschnitt kann auch einen dazu benachbarten Abschnitt aufweisen. Der zylindrische Grundkörper kann eine Längsachse aufweisen, welche z.B. im montierten Zustand mit einer Längsachse des distalen Abschnitts des Lenkers zusammenfällt. Der Anzeigeabschnitt kann senkrecht und/oder koaxial zu dieser Längsachse angeordnet sein. Der Anzeigeabschnitt kann auch angewinkelt zu dieser Längsachse angeordnet sein. Der Anzeigeabschnitt kann im Wesentlichen den gleichen Durchmesser des distalen Abschnitts des Lenkers aufweisen. Der Anzeigeabschnitt kann im montierten Zustand benachbart und/oder bündig zum distalen Abschnitt des Lenkers sein. Der Befestigungsabschnitt kann einen größeren oder einen kleineren Durchmesser als der distale Abschnitt des Lenkers aufweisen. Die Grundform der Befestigungsabschnitts kann im Wesentlichen einer Form des distalen Abschnitts korrespondieren, beispielsweise eine zylindrische Grundform sein, die in einen Hohlzylinder des distalen Abschnitts des Lenkers passt. Der Befestigungsabschnitt kann einen anderen Durchmesser und/oder Dicke als der Anzeigeabschnitt aufweisen. Durch die beschriebene Anordnung kann ein Anzeigeabschnitt besonders weit vom Befestigungsabschnitt positioniert werden und somit dem Benutzer bzw. Fahrer eine möglichst gute Sicht auf den Anzeigeabschnitt ermöglichen, da dieser besonders weit hervorstehen kann.

In einer Ausführungsform ist die Leuchtvorrichtung dazu ausgebildet, wenigsten einen ersten Zustand des Fahrrads mit einer ersten Farbe und einen zweiten Zustand des Fahrrads mit einer zweiten Farbe anzuzeigen. Die erste Farbe und die zweite Farbe können unterschiedliche Farben sein. Beispielsweise können als Farben Rot, Grün, Blau und/oder Weiß gewählt werden. Eine Farbe kann jeweils einem Zustand entsprechen. Die Farbe kann durch eine Leuchte der Leuchtvorrichtung, insbesondere durch eine LED dargestellt werden. Beispielsweise kann Rot durch eine rote LED, Blau durch eine blaue LED, Grün durch eine grüne LED und Weiß durch eine weiße LED dargestellt werden. Zusätzlich oder alternativ können die Farben auch durch eine Kombination von mehreren LEDs dargestellt werden. Beispielsweise kann Weiß durch eine Kombination einer roten, grünen und blauen LED dargestellt werden. Die Leuchten der Leuchtvorrichtung können gleichzeitig mit der gleichen Farbe oder auch gleichzeitig mit unterschiedlichen Farben leuchten, beispielsweise um einen Zustandscode, wie einen Fehlercode, auszugeben. So können mit einfachen Mitteln viele verschiedene Informationen angezeigt werden.

Die Leuchtvorrichtung kann zusätzlich oder alternativ auch durch ein Blinken der Leuchten einen Zustand anzeigen. Beispielsweise kann ein bestimmter Rhythmus einem bestimmten Zustand entsprechen. Zusätzlich oder alternativ kann ein bestimmter Blinkverlauf einem bestimmten Zustand entsprechen. Zusätzlich oder alternativ kann eine Helligkeit oder ein Helligkeitsverlauf auch einem bestimmten Zustand entsprechen. Die Leuchtvorrichtung kann dazu eingerichtet sein, ein Aktivsein des Systems durch ein weißes Leuchten anzuzeigen. Die Leuchtvorrichtung kann dazu eingerichtet sein, ein nicht-Aktivsein des Systems durch ein Ausschalten der Leuchten anzuzeigen. Die Leuchtvorrichtung kann dazu eingerichtet sein, einen Ladestand einer Batterie durch mehrere Leuchten anzuzeigen, wobei der Bruchteil an leuchtenden Leuchten dem Ladestand entspricht. Beispielsweise kann ein Ladestand von 80% durch ein Leuchten von vier von fünf Leuchten angezeigt werden. Die Anzahl an angeschalteten Leuchten kann dabei hochgerundet werden, bei einem Ladestand von 81% können beispielsweise fünf von fünf Leuchten leuchten. Die Anzahl kann auch abgerundet werden.

Die Leuchtvorrichtung kann dazu eingerichtet sein, den Ladestand während eines Aufladens und/oder während eines Entladens anzuzeigen. Die Leuchtvorrichtung kann dazu eingerichtet sein, beim Auftreten oder Detektieren eines Fehlers rot zu blinken. Die Leuchtvorrichtung kann dazu eingerichtet sein, falls ein Ladestand von 10% oder weniger vorliegt, nur eine von mehreren Leuchten anzuschalten. Die Leuchtvorrichtung kann dazu eingerichtet sein, beim Anschalten der Anzeigevorrichtung ein Muster der Leuchtvorrichtung anzusteuern, das einem atmen entspricht, beispielsweise ein rhythmisches heller und dunkler werden. Die Leuchtvorrichtung kann dabei weiß leuchten. Die Leuchtvorrichtung kann dazu eingerichtet sein, beim Ausschalten der Anzeigevorrichtung ein Blinkmuster der Leuchtvorrichtung anzusteuern, dass einem Countdown entspricht, beispielsweise ein sukzessives Ausschalten jeder Leuchte, bis alle ausgeschalten sind. Die Leuchtvorrichtung kann dabei weiß leuchten. Die Leuchtvorrichtung kann dazu eingerichtet sein, bei einer eingehenden Kopplungsanfrage des Smartphones des Nutzers diese Kopplungsanfrage anzuzeigen, beispielsweise durch ein Leuchten mit einer hellblauen Farbe.

Durch das Anzeigen des Zustands des Fahrrads mittels einer Farbe kann ein Erfassen des Zustands seitens des Fahrers sehr einfach sein. Die unterschiedlichen Farben können besonders leicht voneinander unterschieden werden, womit der Fahrer schnell, einfach und/oder verlässlich den aktuell angezeigten Zustand erfassen kann. Die unterschiedlichen Farben können eine optisch besonders ansprechende Anzeige bereitstellen. Auch eine Anzahl aktivierter und deaktivierter Leuchten ist für den Benutzer sehr schnell und einfach zu erfassen.

In einer Ausführungsform ist die Leuchtvorrichtung entlang eines Außenumfangs des Anzeigeabschnitts angeordnet. Der Außenumfang des Anzeigeabschnitts kann ein Umfang eines im Wesentlichen runden und/oder zylindrischen Abschnitts des Anzeigeabschnitts sein. Der Außenumfang kann eine Mantelfläche sein, beispielsweise bezogen auf die Längsachse des Anzeigeabschnitts und/oder auf eine Einschubachse für das Anbringen der Anzeigevorrichtung an dem Lenker. In einer Ausführungsform weist die Leuchtvorrichtung mehrere Leuchten auf. Dabei können die Leuchten entlang des Außenumfangs des Anzeigeabschnitts angeordnet sein. Insbesondere können die Leuchten in einem regelmäßigen Abstand zueinander entlang des Außenumfangs angeordnet sein. Die Leuchten können entlang eines Abschnitts des Außenumfangs angeordnet sein oder entlang des gesamten Umfangs. Beispielsweise kann die Leuchtvorrichtung fünf Anzeigeleuchten aufweisen, welche entlang ungefähr eines Fünftels des Außenumfangs in gleichmäßigen Abständen zueinander angeordnet sind. Die Leuchten können derart angeordnet sein, dass diese von vorne sowie von der Seite sichtbar sind. Beispielsweise kann der Abschnitt des Außenumfangs, an welchem die Leuchten angeordnet sind, bei aufrechter Fahrradstellung schräg nach oben zu dem Fahrer weisen. Beispielsweise kann der Anzeigeabschnitt einen zylindrischen Abschnitt aufweisen, wobei die Leuchten entlang der Kante zwischen der Mantelfläche und der Vorderseite des zylindrischen Abschnitts angeordnet sein können. Die Vorderseite kann eine Stirnseite des Anzeigeabschnitts sein, welcher sich beispielsweise radial zu der Längsachse des Anzeigeabschnitts erstreckt. Die Leuchten können beispielsweise einen Abschnitt auf der Vorderseite und einen Abschnitt auf der Mantelfläche aufweisen und somit sowohl von vorne als auch von der Seite gesehen werden. Die Leuchten können um eine Längsachse der Anzeigevorrichtung angeordnet sein, beziehungsweise jeweils einen gleichen Abstand zu dieser aufweisen. Die Leuchten können auch an einer anderen Stelle, beispielsweise auf der Vorderseite des Anzeigeabschnitts angeordnet sein.

Durch Bereitstellen der Leuchtvorrichtung entlang des Außenumfangs des Anzeigeabschnitts kann ein Erfassen eines Zustands des Fahrrads durch den Fahrer sehr einfach sein. Durch das Bereitstellen mehrerer Leuchten kann ebenfalls ein Erfassen eines Zustands des Fahrrads durch den Fahrer einfach sein, da mehrere Leuchten leichter zu erfassen sein können als eine einzige Leuchte.

In einer Ausführungsform weist die Anzeigevorrichtung eine Eingabevorrichtung zum Erfassen einer Nutzereingabe auf. Die Eingabevorrichtung kann dazu eingerichtet sein, eine Nutzereingabe mechanisch, elektrisch, elektronisch, magnetisch, und/oder durch weitere Mittel zu erfassen. Beispielsweise kann die Eingabevorrichtung durch ein Hineindrücken eines Elements eine Nutzereingabe erfassen. Zusätzlich oder alternativ kann die Eingabevorrichtung auch einen von dem Fahrer ausgeübten Druck durch einen Drucksensor und/oder eine berührungsempfindliche Oberfläche erfassen. Die Eingabevorrichtung kann dazu eingerichtet sein, die Nutzereingabe an eine Steuervorrichtung weiterzuleiten. Die Steuervorrichtung kann ein Teil der Anzeigevorrichtung sein und/oder ein Teil des Fahrrads sein. Beispielsweise kann das Mittel zum Erfassen der Nutzereingabe ein Schalter sein. Die Eingabevorrichtung kann einen Knopf aufweisen, welcher beispielsweise rund sein kann. Der Knopf kann auch rechteckig sein, quadratisch sein, und/oder eine weitere Form aufweisen.

Die Eingabevorrichtung kann auch einen Touchscreen aufweisen, welcher dazu eingerichtet ist, eine Nutzereingabe in Form einer Berührung bzw. eines Drucks zu erfassen. Der Touchscreen kann auch die Leuchtvorrichtung bereitstellen. Beispielsweise kann der Touchscreen dabei einen Zustand anzeigen und dazu eingerichtet sein, eine Nutzereingabe zu erfassen. Der Touchscreen kann dabei eine runde, eine rechteckige, und/oder eine weitere Form aufweisen. Die Nutzereingabe kann ein Anschalten und/oder ein Ausschalten ansteuern. Die Leuchtvorrichtung kann aber auch frei von Mitteln zum Erfassen einer Nutzereingabe sein.

Die Nutzereingabe kann ein Ändern des Zustands des Fahrrads ansteuern, beispielsweise ein Ändern von einem Modus zu einem weiteren Modus. Die Nutzereingabe kann auch ein Anzeigen ansteuern, beispielsweise um ein Anschalten oder Ausschalten der Leuchtvorrichtung zu bewirken. Die Nutzereingabe kann auch ein Einstellen der Anzeigevorrichtung ansteuern, beispielsweise einer Helligkeitseinstellung, einer Farbeinstellung und/oder einer weiteren Einstellung. Die Eingabevorrichtung kann dazu eingerichtet sein, eine Nutzereingabe zu erfassen, um eine Kopplungsanfrage des Smartphones zu bestätigen und/oder zurückzuweisen oder um einen Kopplungsmodus zu aktivieren. Die Anzeigevorrichtung kann einen Stealth Mode aufweisen. In dem Stealth Modus erfolgt beispielsweise eine Anzeige des Zustands nur nach einer Zustandsänderung, beispielsweise kurzfristig für eine vorbestimmte Zeit. In dem Stealth Modus kann die Leuchtvorrichtung auch nur eine bestimmte Zeit nach einem Erfassen einer Nutzereingabe leuchten. Beispielsweise kann die Leuchtvorrichtung nur 10 Sekunden lang nach Erfassen einer Nutzereingabe leuchten und danach abgeschaltet bleiben oder nur nach der Zustandsänderung wieder aktiviert werden, beispielsweise für eine vorbestimmte Zeitdauer.

Durch Bereitstellen einer Eingabevorrichtung werden bei der Anzeigevorrichtung weitere Funktionen ermöglicht. Durch die Eingabevorrichtung kann der Fahrer beispielsweise die Anzeigevorrichtung steuern, um gewünschte Informationen anzeigen zu lassen und/oder um einen gewünschten Modus anzusteuern. Durch eine Ausführung der Eingabevorrichtung als Knopf kann dem Fahrer ein mechanisches Gefühl bei der Betätigung übermittelt werden, womit der Fahrer zuversichtlicher sein kann, dass eine Nutzereingabe erfasst wurde. Ein solches mechanisches Gefühl kann auch als besonders angenehm und/oder als besonders hochwertig von einem Fahrer empfunden werden. Durch eine Ausführung der Eingabevorrichtung als Touchscreen kann eine optisch besonders ansprechende Anzeigevorrichtung bereitgestellt werden und eine Anzahl von Komponenten gering sein.

In einer Ausführungsform weist der Befestigungsabschnitt wenigstens ein Anlageelement auf, mit welchem der Befestigungsabschnitt an dem distalen Abschnitt des Lenkers gehalten ist. Das Anlageelement kann dazu ausgebildet sein, in den distalen Abschnitt des Lenkers einzugreifen und/oder an dem distalen Abschnitt des Lenkers anzuliegen, um den Befestigungsabschnitt an dem distalen Abschnitt zu halten. Der Befestigungsabschnitt kann durch einen Reibschluss bzw. ein Klemmen die Anzeigevorrichtung am distalen Abschnitt halten bzw. mit dem Lenker verbinden, insbesondere durch das Anlageelement. Der Befestigungsabschnitt kann auch durch einen Kleber, Schrauben, Nieten, Magnete und/oder weiteren Befestigungsmöglichkeiten die Anzeigevorrichtung mit dem Lenker verbinden, insbesondere durch das Anlageelement. Das Anlageelement kann dazu ausgebildet sein, radial innen am distalen Abschnitt des Lenkers einzugreifen und/oder anzuliegen, um eine Befestigung bereitzustellen. Das Anlageelement kann auch dazu ausgebildet sein, radial außen am distalen Abschnitt des Lenkers einzugreifen und/oder anzuliegen, um eine Befestigung bereitzustellen. Alternativ oder zusätzlich kann das Anlageelement dazu ausgebildet sein, sowohl radial innen als auch radial außen am distalen Abschnitt des Lenkers einzugreifen und/oder anzuliegen, um eine Befestigung bereitzustellen. Das Anlageelement kann beispielsweise durch ein Ineinanderschieben mit dem distalen Abschnitt wie beschrieben eingreifen. Das Anlageelement kann beispielsweise eine Presspassung bereitstellen. Der Befestigungsabschnitt kann beispielsweise mehrere Anlageelemente aufweisen, welche an einem Außenumfang des Befestigungsabschnitts in Umfangsrichtung und/oder in radialer Richtung beabstandet zueinander angeordnet sind.

Das Anlageelement kann eine Sektion eines Zylindermantels ausbilden, beispielsweise eine im Wesentlichen 30° aufspannende Sektion eines Zylindermantels. Der Befestigungsabschnitt kann insbesondere zwei oder mehrere Anlageelemente aufweisen. Diese können zwei oder mehrere Sektionen eines Zylindermantels ausbilden. Diese können um die Längsachse bzw. die Einschubachse der Anzeigevorrichtung herum angeordnet sein. Die Anlageelemente können auf entgegengesetzten Seiten des Befestigungsabschnitts angeordnet sein. Die Anlageelemente können parallel zueinander verlaufen, sie können zusammenlaufen oder sie können auseinanderlaufen. Beispielsweise können die Anlageelemente einen Winkel von bis zu 1°, bis zu 2°, bis zu 5°, bis zu 10°, bis zu 15°, bis zu 20° oder bis zu 45° zueinander bilden. Die Anlageelemente können ein Metall, einen Kunststoff, einen keramischen Werkstoff und/oder eine Kombination dieser aufweisen. Der Befestigungsabschnitt kann permanent oder lösbar mit dem Lenker verbunden sein. Die Anlageelemente können beispielsweise elastisch ausgebildet sein oder als steife Elemente.

Durch Bereitstellen eines Anlageelements des Befestigungsabschnitts wird eine Anzeigevorrichtung erzielt, die besonders leicht, schnell und/oder nutzerfreundlich am Lenker montiert werden kann. Somit kann die Verwendung einer weiteren Befestigung bzw. weiterer Befestigungsmaterialien vermieden oder minimiert werden.

In einer Ausführungsform korrespondiert eine Grundform des Befestigungsabschnitts zu einer Grundform des distalen Abschnitts des Lenkers. Durch diese Grundformen können der Befestigungsabschnitt und der distale Abschnitt des Lenkers einfach ineinander geschoben werden und/oder eine eindeutige Einschubrichtung vorgegeben werden. Beispielsweise kann die Grundform des Befestigungsabschnitts zylindrisch sein und die Grundform des distalen Abschnitts des Lenkers einen dazu korrespondierenden Hohlzylinder ausbilden. Der Außenumfang der Grundform des Befestigungsabschnitts kann gleich zu einem Innenumfang der Grundform des distalen Abschnitts des Lenkers sein. Falls der Befestigungsabschnitt eine runde Grundform aufweist, kann der distale Abschnitt des Lenkers eine korrespondierende runde Grundform aufweisen. Falls der Befestigungsabschnitt eine rechteckige, dreieckige und/oder weitere Grundform aufweist, kann der distale Abschnitt des Lenkers auch eine rechteckige, dreieckige und/oder weitere Grundform aufweisen. Durch Bereitstellen der beschriebenen Geometrie kann ein besonders einfach und intuitiv zu montierender Befestigungsabschnitt bereitgestellt werden. Durch das Korrespondieren der Geometrien kann ferner ein Befestigungsabschnitt bereitgestellt werden, der auf die Geometrie eines beliebigen Lenkers angepasst ist, womit auch Lenker mit nicht-runden distalen Abschnitten verwendet werden können.

In einer Ausführungsform ist die Anzeigevorrichtung dazu ausgebildet, den Anzeigeabschnitt von dem Befestigungsabschnitt abzunehmen. Der Anzeigeabschnitt kann von dem Befestigungsabschnitt getrennt werden, beispielsweis durch einen Benutzer. Der Anzeigeabschnitt kann durch ein Kopplungsmittel, insbesondere durch einen Bajonettverschluss, mit dem Befestigungsabschnitt verbindbar und/oder abnehmbar sein. Der Bajonettverschluss kann eine durch eine Drehung herstellbare Verbindung bereitstellen. Der Bajonettverschluss kann lösbar sein, beispielsweise durch eine weitere Drehung in eine Gegenrichtung. Der Bajonettverschluss kann zwei Teile aufweisen, wobei der eine Teil in den anderen eingreifen kann. Der eine Teil kann am Anzeigeabschnitt angeordnet sein, und der weitere Teil kann am Befestigungsabschnitt angeordnet sein. Der Bajonettverschluss kann auch durch den Befestigungsabschnitt und den Anzeigeabschnitt ausgebildet werden. Das Kopplungsmittel kann alternativ oder zusätzlich als eine Schnappverbindung ausgebildet sein, mittels welchem der Anzeigeabschnitt mit dem Befestigungsabschnitt verbindbar bzw. lösbar ist. Die Anzeigevorrichtung kann auch eine elektrische Verbindung zwischen dem Anzeigeabschnitt und dem Befestigungsabschnitt aufweisen. Beispielsweise kann diese durch das Kopplungsmittel oder auch durch ein weiteres Mittel bereitgestellt werden. Durch die elektrische Verbindung können Daten und/oder elektrischer Strom an die Anzeigevorrichtung von dem Befestigungsabschnitt übermittelt werden. Der Anzeigeabschnitt kann vom Befestigungsabschnitt abgenommen werden, wenn der Befestigungsabschnitt am Lenker befestigt ist. Der Befestigungsabschnitt kann dabei am Lenker befestigt bleiben. Der Anzeigeabschnitt kann auch wieder mit dem Befestigungsabschnitt verbunden werden. Der Anzeigeabschnitt kann vom Befestigungsabschnitt abgenommen werden, wenn der Befestigungsabschnitt nicht mit dem Lenker verbunden ist. Der Anzeigeabschnitt kann abnehmbar ausgebildet sein.

Durch Bereitstellen des beschriebenen abnehmbaren Anzeigeabschnitts kann eine Anzeigevorrichtung bereitgestellt werden, welche besonders einfach, schnell und/oder angenehm am Lenker angebracht werden kann bzw. entfernt werden kann. Zudem kann so eine Reparatur, ein Aufladen und/oder ein Ersetzen des Anzeigeabschnitts besonders schnell und leicht erfolgen. Beispielsweise kann der Anzeigeabschnitt eine Stromversorgung für die Anzeigevorrichtung aufweisen, wie eine Batterie. Der Anzeigeabschnitt kann dann für ein Laden von der restlichen Anzeigevorrichtung getrennt werden. Die Kupplungsmittel können einen USB-Stecker aufweisen, welcher dann auch zum Laden genutzt werden kann.

In einer Ausführungsform weist die Anzeigevorrichtung eine Energieversorgungsschnittstelle auf, welche dazu ausgebildet ist, die Anzeigevorrichtung in dem distalen Abschnitt des Lenkers mit einer Stromquelle des Fahrrads zu koppeln. Eine Energieversorgungsschnittstelle kann einen Stecker aufweisen, beispielsweise einen USB-Stecker. Die Energieversorgungsschnittstelle kann zusammen mit der Kommunikationsschnittstelle durch eine gemeinsame Schnittstelle bereitgestellt werden. Die Energieversorgungsschnittstelle kann auch durch eine eigene Schnittstelle gebildet werden Die Energieversorgungsschnittstelle kann kabelgebunden oder auch kabellos sein. Beispielsweise kann die Energieversorgungsschnittstelle durch eine Spule die Anzeigevorrichtung induktiv mit der Stromquelle koppeln. Die Energieversorgungsschnittstelle kann im Anzeigeabschnitt ausgebildet sein. Sie kann zusätzlich oder alternativ auch im Befestigungsabschnitt ausgebildet sein. Die Stromquelle kann eine Batterie, ein Akkumulator, ein Elektromotor, ein Dynamo und/oder eine weitere Stromquelle sein. Die Stromquelle kann Gleichstrom oder Wechselstrom bereitstellen.

Durch Bereitstellen einer beschriebenen Energieversorgungsschnittstelle kann die Anzeigevorrichtung besonders kompakt, effizient, nutzerfreundlich und/oder optisch ansprechend mit Strom versorgt werden. Beispielsweise kann die Energieversorgungsschnittstelle in einem Abschnitt angeordnet sein, welcher im montierten Zustand nicht sichtbar ist und somit einen optischen Eindruck der Anzeigevorrichtung nicht oder nur minimal beeinflusst, wie beispielsweise in oder an dem Befestigungsabschnitt.

Ein zweiter Aspekt betrifft einen Lenker eines Fahrrads mit einer Anzeigevorrichtung, wobei die Anzeigevorrichtung an einem distalen Abschnitt des Lenkers befestigt ist. Der Lenker kann ein Rennradlenker sein. Beispielsweise ist der Lenker als Dropbar ausgebildet. Der Lenker kann auch ein gerader Lenker, ein Triathlon-Lenker oder ein anderer Lenker sein. Der Lenker kann beispielsweise Aerobars aufweisen, die besonders aerodynamisch sind. Die Anzeigevorrichtung kann die bereits beschriebene Anzeigevorrichtung sein oder dieser entsprechen. Der Lenker kann ferner Kabel aufweisen, welche mit der Anzeigevorrichtung verbunden sind, insbesondere deren Schnittstellen, und Daten und/oder Strom übertragen. Die Kabel können in einem Innenraum des Lenkers verlaufen oder entlang einer Außenseite des Lenkers verlaufen. Die Kabel können auch teilweise in einem Innenraum des Lenkers und teilweise entlang einer Außenseite des Lenkers verlaufen. Jeweilige weitere Merkmale und Vorteile sind der Beschreibung des ersten Aspekts zu entnehmen.

Ein dritter Aspekt betrifft ein Anzeigesystem zum Anzeigen verschiedener Zustände, insbesondere verschiedener Betriebsmodi, eines Fahrrads, wobei das Anzeigesystem eine Anzeigevorrichtung und eine Steuervorrichtung aufweist. Die Steuervorrichtung ist dazu ausgebildet, den derzeitigen Zustand des Fahrrads an die Anzeigevorrichtung über die Kommunikationsschnittstelle der Anzeigevorrichtung zu übermitteln. Die Anzeigevorrichtung kann die bereits beschriebene Anzeigevorrichtung gemäß dem ersten Aspekt sein oder dieser entsprechen. Jeweilige weitere Merkmale und Vorteile sind der Beschreibung des ersten Aspekts zu entnehmen.

Die Steuervorrichtung kann beispielsweise eine Steuervorrichtung einer elektrischen Gangschaltung, einer steuerbaren Bremsanlage, einer steuerbaren Federungsvorrichtung und/oder eines Unterstützungsmotors des Fahrrads aufweisen. Die Steuervorrichtung kann dazu ausgebildet sein, den Zustand zu steuern. Die Steuervorrichtung kann alternativ oder zusätzlich dazu ausgebildet sein den Zustand zu erfassen, beispielsweise über einen Datenbus und/oder über einen Sensor. Die Steuervorrichtung kann dazu ausgebildet sein, eine Stromstärke, eine Spannung, eine Leistung, eine Position, eine Geschwindigkeit, eine Drehzahl, und/oder eine weitere Größe zu messen und basierend darauf einen Zustand zu erfassen. Die Steuervorrichtung kann dazu ausgebildet sein, ein Signal zu erhalten, welches einem Zustand entspricht, um einen Zustand zu erfassen. Die Steuervorrichtung kann dazu ausgebildet sein, einen Speicher auszulesen, um einen Zustand zu erfassen. Die Steuervorrichtung kann eine zu der Kommunikationsschnittstelle der Anzeigevorrichtung korrespondierende Kommunikationsschnittstelle aufweisen.

Ein vierter Aspekt betrifft ein Fahrrad mit einem Lenker und einer daran befestigten Anzeigevorrichtung. Die Anzeigevorrichtung kann die bereits beschriebene Anzeigevorrichtung gemäß dem ersten Aspekt sein. Der Lenker kann der Lenker gemäß dem zweiten Aspekt sein. Das Fahrrad kann zusätzlich oder alternativ das bereits beschriebene Anzeigesystem gemäß dem dritten Aspekt aufweisen. Jeweilige weitere Vorteile und Merkmale sind der Beschreibung dieser Aspekte zu entnehmen. Das Fahrrad kann einen Elektromotor aufweisen, welcher beispielsweise dazu eingerichtet sein kann, eine Muskelkraft des Fahrers zu unterstützen. Zusätzlich oder alternativ kann der Elektromotor dazu eingerichtet sein, eine Fortbewegung des Fahrrads zu erwirken, beispielsweise durch ein Übertragen einer Drehleistung an die Räder. Durch Bereitstellen eines Fahrrads mit einer bereits beschriebenen Anzeigevorrichtung wird ein Fahrrad erzielt, das für den Fahrer besonders einfach und/oder angenehm zu bedienen ist.

Ein fünfter Aspekt betrifft ein Verfahren zum Anzeigen eines Zustands eines Fahrrads durch eine bereits beschriebene Anzeigevorrichtung gemäß dem ersten Aspekt. Weitere Merkmale und Vorteile sind der Beschreibung dieses Aspekts zu entnehmen. Das Verfahren weist einen ersten Schritt des Übermittelns des derzeitigen Zustands des Fahrrads an die Anzeigevorrichtung über die Kommunikationsschnittstelle der Anzeigevorrichtung und einen zweiten Schritt des Anzeigens des Zustands des Fahrrads durch die Leuchtvorrichtung der Anzeigevorrichtung auf. Das Übermitteln kann ein Übertragen und/oder ein Kommunizieren aufweisen. Das Übermitteln kann zum Beispiel durch eine Steuervorrichtung erfolgen. Das Verfahren kann einen Schritt eines Erfassens des Zustands des Fahrrads aufweisen. Das Erfassen des Zustands kann ein Messen, Detektieren, Abschätzen und/oder Bestimmen aufweisen. Das Anzeigen des Zustands des Fahrrads kann durch ein Leuchten mit einer bestimmten Farbe, mit einer bestimmten Helligkeit, in einem bestimmten Rhythmus, mit einem bestimmten Muster und/oder mit einem weiteren, von einem Nutzer erkennbares Leuchten erfolgen. Das Anzeigen ermöglicht dem Fahrer selbst den Zustand des Fahrrads zu erkennen und basierend darauf zum Beispiel sein Fahrverhalten und/oder einen Modus des Fahrrads anzupassen.

### Kurze Beschreibung der Figuren

Fig. 1 zeigt in einer schematischen Ansicht eine Anzeigevorrichtung gemäß einer Ausführungsform der vorliegenden Erfindung.
Fig. 2 zeigt in einer schematischen Ansicht einen Lenker mit der in Fig. 1 gezeigten Anzeigevorrichtung.
Fig. 3 zeigt schematisch Schritte eines Verfahrens zum Anzeigen eines Zustands eines Fahrrads.

### Detaillierte Beschreibung der Figuren

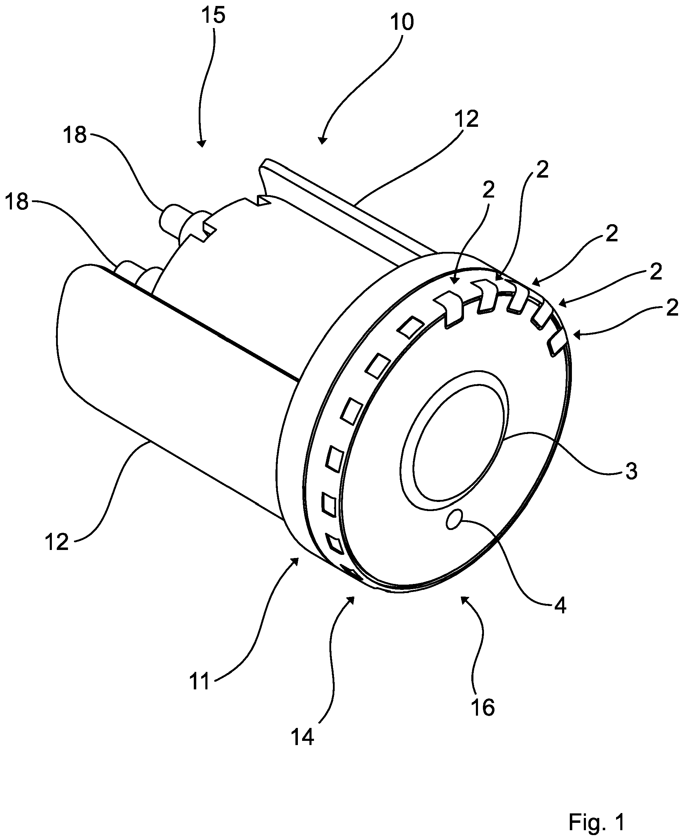

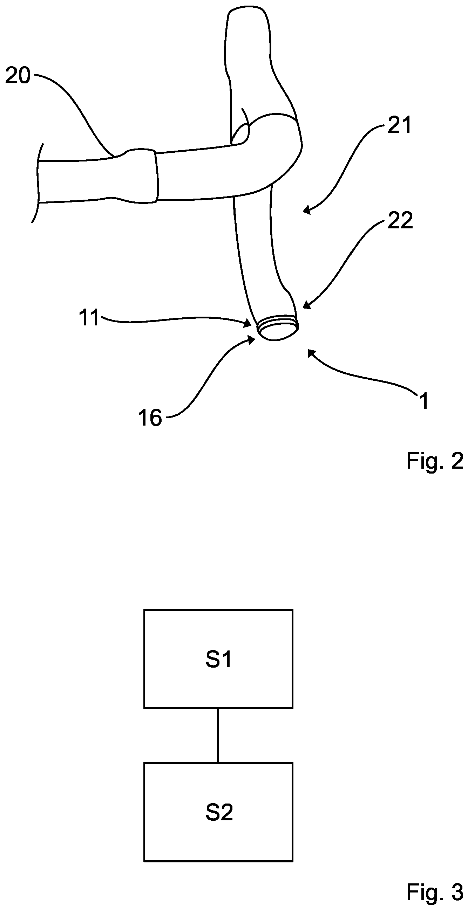

Fig. 1 zeigt in einer schematischen Ansicht eine Anzeigevorrichtung 1 gemäß einer Ausführungsform der vorliegenden Erfindung. Die Anzeigevorrichtung 1 weist einen Befestigungsabschnitt 10 und einen Anzeigeabschnitt 14 auf, wobei der Anzeigeabschnitt 14 über einen hier nicht gezeigten Bajonettverschluss oder andere Art von lösbarer Verbindung mit dem Befestigungsabschnitt 10 verbunden ist. Der Befestigungsabschnitt 10 ist dazu ausgebildet, an einem distalen Ende 22 eines Lenkers 20 befestigt zu werden, wie zum Beispiel in Fig. 2 gezeigt. Der Anzeigeabschnitt 14 ist dazu ausgebildet, durch den Bajonettverschluss lösbar mit dem Befestigungsabschnitt 10 und somit dem Lenker 20 verbunden zu werden.

Der Anzeigeabschnitt 14 weist eine im Wesentlichen scheibenförmige Vorderseite 16 und eine Kommunikationsschnittstelle auf, wobei die Kommunikationsschnittstelle als ein zylindrischer Steckerabschnitt 15 ausgeführt ist. Von der Vorderseite 16 erstreckt sich der Anzeigeabschnitt 14 zylindrisch in Richtung des Befestigungsabschnitts 10 entlang seiner Längsachse und bildet so eine Mantelfläche aus. Die Vorderseite 16 und der

Steckerabschnitt 15 sind koaxial zueinander entlang einer Längsachse des Anzeigeabschnitts 14 angeordnet. Der Anzeigeabschnitt 14 ist im Wesentlichen rotationssymmetrisch um seine Längsachse. Die Vorderseite 16 ist in Fig. 1 vor dem Steckerabschnitt 15 dargestellt und weist einen größeren Radius als der Steckerabschnitt 15 auf.

Der Anzeigeabschnitt 14 weist an der Vorderseite 16 weist eine Leuchtvorrichtung auf, die hier durch fünf Leuchten 2 bereitgestellt wird, welche entlang eines Außenumfangs der Vorderseite 16 gleichmäßig voneinander beabstandet angeordnet sind. Die Leuchten 2 sind hier als LEDs ausgeführt. Die Leuchten 2 sind, ausgehend von einem oberen Punkt der Vorderseite 16, im Uhrzeigersinn entlang ungefähr eines Fünftels des Umfangs der Vorderseite 16 verteilt. Entlang des weiteren Umfangs sind rechteckige Aussparungen angeordnet. Die Leuchten 2 weisen eine im Wesentlichen rechteckige Form auf und erstrecken sich von der Stirnfläche der zylindrischen Vorderseite 16 zu dessen Mantelfläche und somit über eine Kante der Vorderseite 16 und der Mantelfläche. Die Leuchten 2 weisen zwischen der Mantelfläche und der Stirnfläche einen abgerundeten Übergang auf.

Mittig auf der Vorderseite 16 des Anzeigeabschnitts 14 ist eine Eingabevorrichtung, die als runder Knopf 3 ausgeführt ist, angeordnet. Der Knopf 3 ist dazu eingerichtet, eine Steuerung der Anzeigevorrichtung 1 bzw. eines Fahrrads bereitzustellen. Beispielsweise kann der Knopf 3 dazu eingerichtet sein, die Anzeigevorrichtung 1 und/oder das Fahrrad an- bzw. auszuschalten. Zusätzlich oder alternativ kann der Knopf 3 auch dazu eingerichtet sein, zwischen verschiedenen Betriebsmodi des Fahrrads zu wechseln. Unter dem Knopf 3 ist ein Helligkeitssensor 4 angeordnet, welcher eine runde Sensorfläche aufweist, die unter dem Knopf 3 angeordnet ist und einen kleineren Durchmesser als diesen aufweist. Der Helligkeitssensor 4 ist dazu eingerichtet, eine Helligkeit der Umgebung zu erfassen und einer Steuervorrichtung bereitzustellen. Diese Information kann beispielsweise dazu verwendet werden, eine Helligkeit der Leuchten 2 einzustellen.

Der Steckerabschnitt 15 weist an einem der Vorderseite 16 abgewandten Ende Stecker 18 auf, welche dazu ausgebildet sind, mit einer Steuervorrichtung verbunden zu werden. Diese können Daten und/oder elektrischen Strom übertragen, um die Anzeigevorrichtung 1 zu steuern und/oder mit Strom zu versorgen. An der der Vorderseite 16 abgewandten Kante des Steckerabschnitts 15 in Fig. 1, die zwischen der Mantelfläche und der Stirnfläche des Steckerabschnitts 15 ausgebildet ist, befinden sich zwei Einschnitte, welche der Montage der Stecker 18 dienen und hier nicht weiter beschrieben werden. Die Mantelfläche des Steckerabschnitts 15 ist glatt.

Der Befestigungsabschnitt 10 weist einen Außenring 11 und zwei Anlageelemente 12 auf, wobei die beiden Anlageelemente 12 auf entgegenliegenden Seiten des Außenrings 11 radial außenseitig zu dem Steckerabschnitt 15 angeordnet sind. Der Außenring 11 ist hinter der Vorderseite 16 und um den Steckerabschnitt 15 des Anzeigeabschnitts 14 angeordnet. Der Außenring 11 kann in einer anderen Ausführungsform einen Teil des Anzeigeabschnitts 14 ausbilden. Der Außenring 11 weist eine Ringform auf. Der Außenring 11 liegt im montierten Zustand an dem Lenker 20 an und begrenzt somit eine Einstecktiefe. Der Außenring 11 schließt dabei im Wesentlichen bündig an den Lenker 20 und den Anzeigeabschnitt 14 an. Der Außenring bildet hier einen Teil des Bajonettverschlusses zur Koppelung mit dem Anzeigeabschnitt 14 aus. Die zwei Anlageelemente 12 sind dazu ausgebildet, in einen Lenker 20 einzugreifen, um die Anzeigevorrichtung 1 an diesem zu befestigen. Sie weisen eine gekrümmte Form auf, die zwei Sektionen einer Zylindermantelfläche bilden, das heißt, welche der Form des Außenrings 11 und des Steckerabschnitts 15 zumindest abschnittsweise folgt.

Der Befestigungsabschnitt 10 ist koaxial um den Anzeigeabschnitt 14 angeordnet. Die Anlageelemente 12 sind um den Steckerabschnitt 15 angeordnet und ragen über dessen Ende hinaus. Die Anlageelemente 12 laufen vom Außenring 11 zu den Steckern 18 hin leicht zusammen und schließen somit einen Winkel ein. Dadurch kann beim Einschieben in den Lenker 20 eine Klemmwirkung erzielt werden. Die Anlageelemente 12 bilden, wie der Außenring 11, eine zylindrische Außenkontur und damit eine zylindrische Grundform. Die Vorderseite 16 liegt am Außenring 11 an und ist koaxial zu dem Außenring 11 positioniert. Zwischen dem Außenring 11 und dem Anzeigeabschnitt 14 gibt es einen dünnen Spalt aufgrund deren Trennbarkeit. In einer anderen Ausführungsform können der Außenring 11 und eine Außenhaut des Anzeigeabschnitts 14 auch einstückig ausgebildet sein, beispielsweise zusammen mit den Anlageelementen 12.

Fig. 2 zeigt in einer schematischen Ansicht einen Lenker 20 eines Fahrrads mit der in Fig. 1 gezeigten Anzeigevorrichtung 1. Es ist hier nur eine rechte Seite des Lenkers 20 gezeigt. Der Lenker 20 ist ein Rennradlenker und weist zwei nach unten gerichtete Bögen am Ende der Lenkerstange auf, wobei in Fig. 2 nur der rechte Bogen 21 gezeigt ist. Am distalen Ende 22 des rechten Bogens 21 ist die Anzeigevorrichtung 1 angeordnet. Das distale Ende 22 des rechten Bogens 21 kann einen kurzen geraden Abschnitt ausbilden. Es sind der Außenring 11 des Befestigungsabschnitts 10 und die Vorderseite 16 des Anzeigeabschnitts 14 dargestellt, wobei der Außenring 11 zwischen der Vorderseite 16 und dem Lenker 20 angeordnet ist. Weitere Elemente der Anzeigevorrichtung 1 sind in der hier gezeigten vereinfachten Ansicht nicht dargestellt. Dazu gehören beispielsweise die Leuchten 2, welche auf einen Fahrer ausgerichtet sind und damit an einem oberen Teilabschnitt des Anzeigeabschnitts 14 bei aufrechtstehendem Fahrrad angeordnet sind. Die Anzeigevorrichtung 1 ist koaxial zu einer Mittellinie des Lenkers 20 angeordnet. Der Lenker 20 ist hohl ausgestaltet, das heißt, er weist einen hier nicht dargestellten Hohlraum bzw. eine Aussparung auf. Die Anlageelemente 12 des Befestigungsabschnitts 10 ragen in diesen Hohlraum hinein, um die Anzeigevorrichtung 1 am Lenker 20 zu befestigen. Die Anzeigevorrichtung 1 ist so in der Aussparung gehalten. Es kann eine zusätzliche dauerhafte Fixierung des Befestigungsabschnitts geben, wie eine Verklebung der Anlageelemente 12 innenseitig in dem Lenker 20. Die Anzeigevorrichtung 1 ist so angeordnet, dass die Vorderseite 16 weg von einer Fahrtrichtung des Fahrrads zeigt. Somit ist für einen Fahrer die Anzeigevorrichtung 1 einfach zu sehen. Ferner ist die Anzeigevorrichtung 1 leicht für den Fahrer mit der Hand zu erreichen, um zum Beispiel den Knopf 3 zu betätigen.

Fig. 3 zeigt schematisch Schritte eines Verfahrens zum Anzeigen verschiedener Zustände, insbesondere verschiedener Betriebsmodi, eines Fahrrads mit einer in den Figs. 1 und 2 gezeigten Anzeigevorrichtung 1. Das Verfahren umfasst einen ersten Schritt des Übermittelns I des derzeitigen Zustands des Fahrrads an die Anzeigevorrichtung 1 über die Kommunikationsschnittstelle 15, sowie einen zweiten Schritt des Anzeigen II des übermittelten Zustands des Fahrrads durch die Leuchtvorrichtung 2 der Anzeigevorrichtung 1. Der Schritt des Übermittelns I kann ein Übertragen des derzeitigen Zustands über die Kommunikationsschnittstelle 15 z.B. als elektrisches und/oder digitales Signal aufweisen. Das Übermitteln I kann durch eine Steuervorrichtung des Fahrrads oder der Anzeigevorrichtung 1 erfolgen. Zuvor kann zum Beispiel ein Erfassen eines Betriebsmodus, einer Geschwindigkeit, einer Drehzahl, eines Drehmoments, eines elektrischen Stroms und/oder eines Stillstandes erfolgen. Der Schritt des Anzeigens II kann insbesondere durch die Leuchtvorrichtung 2 der Anzeigevorrichtung 1 durchgeführt werden. Beispielsweise können diese in Abhängigkeit des erfassten Zustands mit unterschiedlichen Farben leuchten, wobei eine Farbe jeweils mit einem Zustand in Beziehung steht. Die Leuchtvorrichtung kann auch durch das Leuchten mit einem bestimmten Rhythmus, mit einem bestimmten Muster und/oder mit einem weiteren, von einem Nutzer erkennbaren Leuchten einen Zustand anzeigen.

### Bezugszeichen

- 1: Anzeigevorrichtung
- 2: Leuchtvorrichtung / Leuchten
- 3: Knopf
- 4: Helligkeitssensor
- 10: Befestigungsabschnitt
- 11: Außenring
- 12: Anlageelement
- 14: Anzeigeabschnitt
- 15: Steckerabschnitt
- 16: Vorderseite
- 18: Stecker
- 20: Lenker
- 21: Bogen
- 22: distaler Abschnitt
- I: Übermitteln
- II: Anzeigen

## Patentansprüche

1. Anzeigevorrichtung (1) zum Anzeigen verschiedener Zustände, insbesondere verschiedener Betriebsmodi, eines Fahrrads,
wobei die Anzeigevorrichtung (1) einen Befestigungsabschnitt (10), einen Anzeigeabschnitt (14) und eine Kommunikationsschnittstelle (15) aufweist,
wobei der Befestigungsabschnitt (10) dazu ausgebildet ist, die Anzeigevorrichtung (1) an einem distalen Abschnitt (22) eines Lenkers (20) zu befestigen,
wobei die Kommunikationsschnittstelle (15) dazu ausgebildet ist, die verschiedenen Zustände des Fahrrads zu empfangen,
wobei der Anzeigeabschnitt (14) eine Leuchtvorrichtung (2) aufweist, welche dazu ausgebildet ist, die verschiedenen empfangenen Zustände anzuzeigen, und
wobei die Anzeigevorrichtung (1) an dem Lenker (20) durch ein relatives Ineinanderschieben von dem Befestigungsabschnitt (10) und dem distalen Abschnitt (22) des Lenkers (20) montierbar ist.

2. Anzeigevorrichtung (1) nach Anspruch 1, **dadurch gekennzeichnet, dass** der Befestigungsabschnitt (10) einen ersten Endabschnitt der Anzeigevorrichtung (1) und der Anzeigeabschnitt (14) einen dazu entgegengesetzten Endabschnitt der Anzeigevorrichtung (1) ausbildet.

3. Anzeigevorrichtung (1) nach Anspruch 1 oder 2, **dadurch gekennzeichnet, dass** die Leuchtvorrichtung (2) dazu ausgebildet ist, wenigsten einen ersten Zustand des Fahrrads mit einer ersten Farbe und einen zweiten Zustand des Fahrrads mit einer zweiten Farbe anzuzeigen.

4. Anzeigevorrichtung (1) nach einem der vorhergehenden Ansprüche, **dadurch gekennzeichnet, dass**
die Leuchtvorrichtung (2) entlang eines Außenumfangs des Anzeigeabschnitts (14) angeordnet ist.

5. Anzeigevorrichtung (1) nach einem der vorhergehenden Ansprüche, **dadurch gekennzeichnet, dass**
die Anzeigevorrichtung (1) eine Eingabevorrichtung (3) zum Erfassen einer Nutzereingabe aufweist.

6. Anzeigevorrichtung (1) nach einem der vorhergehenden Ansprüche, **dadurch gekennzeichnet, dass**
der Befestigungsabschnitt (10) wenigstens ein Anlageelement (12) aufweist, mit welchem der Befestigungsabschnitt (10) an dem distalen Abschnitt (22) des Lenkers (20) gehalten werden kann.

7. Anzeigevorrichtung (1) nach einem der vorhergehenden Ansprüche, **dadurch gekennzeichnet, dass**
eine Grundform des Befestigungsabschnitts (10) zu einer Grundform des distalen Abschnitts (22) des Lenkers (20) korrespondiert.

8. Anzeigevorrichtung (1) nach einem der vorhergehenden Ansprüche, **dadurch gekennzeichnet, dass**
die Anzeigevorrichtung (1) dazu ausgebildet ist, den Anzeigeabschnitt (14) von dem Befestigungsabschnitt (10) abzunehmen.

9. Anzeigevorrichtung (1) nach einem der vorhergehenden Ansprüche, **dadurch gekennzeichnet, dass**
die Anzeigevorrichtung (1) eine Energieversorgungsschnittstelle aufweist, welche dazu ausgebildet ist, die Anzeigevorrichtung (1) in dem distalen Abschnitt (22) des Lenkers (20) mit einer Stromquelle des Fahrrads zu koppeln.

10. Lenker (20) eines Fahrrads mit einer Anzeigevorrichtung (1) nach einem der vorhergehenden Ansprüche, wobei die Anzeigevorrichtung (1) an einem distalen Abschnitt (22) des Lenkers (20) befestigt ist.

11. Anzeigesystem zum Anzeigen verschiedener Zustände, insbesondere verschiedener Betriebsmodi, eines Fahrrads,
wobei das Anzeigesystem eine Anzeigevorrichtung (1) nach einem der Ansprüche 1 bis 9 und eine Steuervorrichtung aufweist,
wobei die Steuervorrichtung dazu ausgebildet ist, den derzeitigen Zustand des Fahrrads an die Anzeigevorrichtung (1) über die Kommunikationsschnittstelle (15) der Anzeigevorrichtung (1) zu übermitteln.

12. Fahrrad mit einem Lenker (20) und nach Anspruch 10 und/oder einem Anzeigesystem nach Anspruch 11.

13. Verfahren zum Anzeigen verschiedener Zustände, insbesondere verschiedener Betriebsmodi, eines Fahrrads mit einer Anzeigevorrichtung (1) nach einem der Ansprüche 1 bis 9, aufweisend die Schritte:
Übermitteln (I) des derzeitigen Zustands des Fahrrads an die Anzeigevorrichtung (1) über die Kommunikationsschnittstelle (15) der Anzeigevorrichtung (1); und
Anzeigen (II) des übermittelten Zustands des Fahrrads durch die Leuchtvorrichtung (2) der Anzeigevorrichtung (1).
